# EUROPEAN PATENT SPECIFICATION

(11) **EP 1 425 474 B1**
(45) Date of publication and mention of the grant of the patent: **30.09.2009**
(21) Application number: 02773131.4
(22) Date of filing: 20.08.2002
(51) Int. Cl.: C04B 28/02, B28B 1/52, B32B 21/02

(54) **COATED, CEMENT BONDED WOOD PARTICLE BOARDS**
BESCHICHTETE ZEMENTSPANPLATTEN
PANNEAUX DE PARTICULES DE BOIS AGGLOMEREES AU CIMENT QUI SONT MUNIS D'UN REVETEMENT

(30) Priority: 20.08.2001 TR 200102407
(43) Date of publication of application: 09.06.2004
(73) Proprietor: Tepe Betopan Yapi Malzemeleri Sanayi Ve Ticaret A.S., 06530 Ankara (TR)
(72) Inventor: ICTEN,A.C. Tepe Betopan Yapi Malzemeler San.Ve Tic, 06530 Ankara (TR)
(74) Representative: Yavuzcan, Alev
(86) International application number: PCT/TR2002/000047
(87) International publication number: WO 2003/016626

(56) References cited:
- EP-A- 0 236 758
- DE-A- 3 327 039
- DE-U- 29 504 360
- FR-A- 1 094 752
- LU-A- 28 478
- US-A- 5 188 889
- US-A- 5 840 226
- US-A- 5 945 044

## Description

This invention is related to the coating of both sides of the wood containing layer (s) of the boards of cement bonded short wood particles, cement bonded non oriented long wood particles (strands) and of high density cement bonded wood strands, again with a mortar of materials having an inorganic or an organic bonding material but containing no wood.

The invention relates to a cement bonded wood particle board according to claim 1.

In all the boards of cement bonded wood particles, there is a moisture content, depending on the relative humidity and temperature. When this moisture content decreases, the material contracts; when it increases, the material expands. Such materials do not have dimensional stability. Said instability shows itself in the variations of length and width (in the linear direction), as well as in becoming concave or convex or in warping (in shape), and these characteristics create problems in the use of these materials.

In the state of art, according to the Czech Patent No.185335, for other purposes, only one face of the board with wood particles is coated with a thin silicate mortar and the other face is coated with a silicate mortar mixed with saw dust.

In the state of art, according to the U.S. Patent No.5188889, this problem is tried to be solved, by using cement, silica containing materials and 5-25 % wood particles in the layers constituting both faces of the board.

In the existing technology autoclave process or carbon dioxide injection is used, in order to decrease the instability of these cement-bonded particleboards. On one-side, these techniques are relatively expensive investments, and on the other side, they are able to decrease the linear instability to about 2/3.

In order to realize its aim of producing a much more stable board, the material and the process used by this invention is the coating of the middle layer(s), which contain(s) wood particles, and has (have) a lower water vapour diffusion resistance and a higher moisture content, when it reaches an equilibrium with the medium, with a layer made of a mortar containing no wood particles, and which is more suitable from the point of view of these characteristics as well as of stability.

The coated cement bonded wood particleboard, which is realized in order to attain the aim of this invention is shown in the annexed figures as follows:

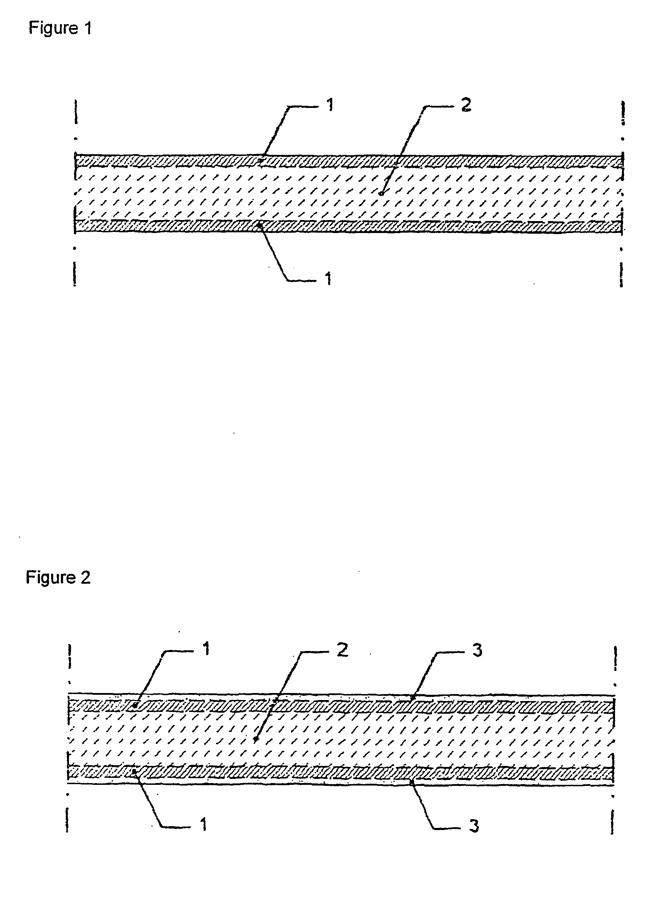

Fig.1-The vertical section of the cement bonded wood particleboard, produced with layers, containing no wood particles, shown in its position of production.
Fig.2-The vertical section of the cement bonded wood particleboard, produced with layers surrounding the layers containing no wood particles, shown in its position of production.

A reference numeral is assigned to each layer as follows:
1. The layer without wood particles
2. The layer with wood particles.
3. The layer forming the surface.

The subject of invention, the coated cement bonded wood particleboard is produced by coating the layer(s) with wood particles (2) by layers containing no wood particles (1) or by additional coating of these layers containing no wood particles (1) by surface layer(s) made of a mix without any bonding material and/or with wood particles (3). In this way, a cement bonded wood particleboard, which has very limited instability, very hard surfaces, which is more durable against fire, which do not emit toxic gases in case of fire, and to which all decorative appearances, motives and textures that can be applied on concrete can be given, is produced.

Cement bonded wood particleboards, which has structural characteristics, are divided into three; as those, having short wood particles, the majority of which have lengths less than about 40 mm, and thicknesses less than about 1 mm; having long wood particles (strands), which are non oriented, and the majority of which have lengths between about 40 mm and 150 mm, and thicknesses less than 1 mm; and having strands, the majority of which have lengths between 150 mm and 500 mm.

In the layers, which do not contain any wood particles (1), and which coat both surfaces of the layers containing wood particles (2), bonding materials are used, which are divided into two as inorganic bonding materials and organic bonding materials. As inorganic bonding materials, for example materials that can resist weathering, like Portland cement, Portland cements having admixtures, alumina cement and lime are being used. As organic bonding materials, those organic bonding materials, which are used in the production of artificial marble, artificial granite etc. are being used. Cement types, having less shrinkage are preferred; and the weight of the Portland cement have to be between 15-60 % and as less as possible. In addition, sand and aggregate are being used in the mortar which forms the layers without wood particles (1) and which surrounds the layer(s) with wood particles (2), preferably in the ratio of 60-85 %. In order to produce more stable layers (1), the ratio of (sand + aggregate) : cement is increased. However, if this ratio is increased too much, the strength decreases. The dimensional instability of these layers (1), which depend on the moisture content of the material, and which in turn changes by the relative humidity and temperature of the medium, is much less than those with wood particles (2). In the mortar, wood particles may be used less than 5 % by weight. However, preferably wood particles are not used at all. Because of this reason, this layer is called " The layer without wood particles" (1). Bonding materials such as Portland cement types and lime, which resist weathering; fly ash, silica fume and other various puzzolans; all mortar additives, which are known in the mortar and concrete technology, such as the ones used to avoid cracking, to give flexibility, to avoid water absorption, to increase strength, to increase workability; fibres; organic materials such as expanded styropore particles, which are used in concrete; expanded perlite, expanded clay, expanded vermiculite, pumice and similar materials, and aggregates, which are produced from different rocks; sand, materials between the sizes of powder and aggregates, produced by the grinding and/or crushing of rocks such as quartz, granite, limestone and dolomite; different aggregates, sands and pigments for the aim of giving the appearances of such surfaces with sand or with grain or of those materials such as marble and granite can be used in the mortar. In the layers (1), quartz and limestone is advised, for better stability. Quartz is used for a harder surface, limestone and similar soft aggregates and ground rocks are used for boards, which are easier to cut.

The ambient moisture content and the rate of water vapour diffusion of each of the layers without wood particles (1), in its hardened state should preferably be roughly equal or less than that of concrete, which has the ratio by weight of (aggregate + sand) : cement : water (3:1:0,45), and which is produced according to its standard. In any case, these ratios should be less than that (those) of the layer(s) with wood particles (2). According to the invention, with sand, aggregates, silica fume, powder, fibre and various similar materials and pigments used in the layers (1), which coat the present layer(s) with wood particles (2) and with the known processes, which can be applied on the surfaces, new textures, decorative surfaces such as those of artificial granite, artificial marble and mosaic and/or very hard surfaces are given to the coated cement bonded wood particleboard. Water absorption of the exterior surfaces and the instability (in shape) of the coated cement bonded wood particleboards are decreased, by mixing silicone additives in the mortar, which forms the layers without wood particles (1) and which coats the exterior of the layers with wood particles (2). In this way, especially the increase of the instability (in shape) by the expansion of the surface layers, by water absorption and by the shrinkage after drying is avoided, and thus, there is no more need for the use of exterior paints for avoiding water absorption. In addition, the adhering of dirt to the surfaces is significantly avoided by the use of silicone additives. The reason for this is the avoiding of the entering of the dirt particles into the water repellent surfaces together with water, and the washing away of these dirt particles, which cannot penetrate the surfaces by rain. Thus, clean surfaces are protected with their live appearances. Similarly, the need to use paints with high factors of water vapour diffusion resistance, in order to increase the factors of water vapour diffusion resistance, is avoided. In this way, coated cement bonded wood particleboards, which are more economical and which have longer service life are produced because they require no paint; and thus, they will have no paint, which disintegrate by weathering.

Water ratio of the mortar, which will form the layer without wood particles (1) surrounding the layer(s) with wood particles (2) is 0% or more depending on the water transmission between the adjacent layers (2) (3). This ratio is preferably 40-45% in the layer(s) (2) with wood particles, and 4-7 % in the layer without wood particles (1). The grain size and the granulometry of the sand and aggregates in the layer without wood particles (1) are designed according to the design of the appearance, which will be given to the surface, to texture (different appearances, which will be given by recesses, projections and /or different magnitudes of porosity), to relief and/or to thickness. A good quality relief can be produced on the outside layers (1) by keeping the grain size of the sand and aggregates small (0-300 µ or 0-800 µ or similar). In order to produce a cement bonded wood particleboard, which has a higher strength and more stability, a better granulometry and a better consolidation should be preferred. Materials, which are used in the layers without wood particles (1), can be used in the layer with wood particles (2).

In the production of cement bonded wood particleboards, which have short particles having lengths approximately less than 40mm and thicknesses approximately less than 1mm, either mechanical or air blown process is used and distribution is realised by two or three distribution machines. In the production of the coated cement bonded wood particleboards, in the process, which has three distribution machines, the first and third distributing machines, which distribute the material with fine grains does the distribution totally mechanically. The mortar, which consists of cement as the bonding material and other materials without wood particles, are spread with the first and third spreading machines, below and over the surface of the layer with wood particles (2) respectively, in a manner to form layers (1), one below the lower surface and one over the upper surface mechanically and homogenously, without causing any segregation between the finer and coarser grains of the material forming the mortar. If different textures, such as finer and coarser textures are required to be formed, by these layers (1) on the surfaces of the coated cement bonded wood particleboards, the technique of spreading is arranged in such a way that the finer or coarser grains are located on the outer sides and/or the ratios of fine or coarse grains are increased accordingly. The cement and other materials, which form the mortar, are transferred to the bunkers and to the spreading sections by the techniques of today. When two spreading machines are used for the layers with wood particles (2); the two spreading machines mentioned above are added as the first and fourth spreading machines with their preparation sections.

In the production of coated cement bonded non-oriented long wood particleboards, where particles are used, the majority of which has lengths approximately between 40 mm and 150 mm and thicknesses less than 1mm, again a similar process as mentioned above is used with the two separate spreading machines together with their common mixer and dosage units. The coated high density cement bonded wood strand boards, where strands are used, the majority of which has lengths between 150mm and 500mm, are also produced with the processes explained above for the coated cement bonded long wood particles. After the section, where spreading machines are located, the processes of pressing, hardening, demoulding, final hardening by letting them stay for an additional time and/or autoclaving are applied with the existing technologies. In the case, where an inorganic bonding material is used, both surfaces of the layer(s) (2) with wood particles are coated with the existing technologies, by the mix composed of this bonding material and the materials used together with this bonding material.

The coated cement bonded wood particleboards, which are produced with the autoclave process are produced as follows: The layer(s), with wood particles (2), and preferably having by weight 30-70% a silica-containing material, 30-60% cement, 5-25% wood particles and 30-45% water and the layers without wood particles (1), coating these layers and preferably having by weight 35-70% silica containing aggregates, sand and/or silica fume or these layers (2), (1) together with the layer(s) (3), which in turn coat the layers without wood particles are altogether pressed by a pressure of 10-40 kg/cm², prehardened by letting them stay under a temperature of 60 -80 °C and hardening process completed, by letting them stay in an autoclave having 10-20 kg/cm² pressure and 60-180 °C temperature. During this process, the formation of calcium silicate is completed, by the reaction of cement and silica containing materials.

The layers without wood particles (1) are applied on both sides of the layer(s) with wood particles (2); otherwise, the cement bonded wood particleboard warps much more and its dimensional stability decreases. If a layer without wood particles (1) is applied only on one surface of the layer with wood particles (2) or in the same medium, if the water vapour diffusion resistance or the equilibrium moisture content of the layer without wood particles (1) on one surface is different than the one on the other surface, a board produced in such a way will try to warp. In order to produce more stable coated cement bonded wood particleboard, the thicknesses of the layers without wood particles (1), which are coating the lower and upper surfaces of the layer with wood particles (2) have to be increased. In order to avoid the warping of the board, the thicknesses of the layers without wood particles (1) used on the upper and lower surfaces have also to be the same, in case the same materials are used in their production.

As explained above, it is possible to produce different surfaces for decorative and other purposes by layers without wood particles (1); and it is also possible to spread layers (3) over and/or under the layers without wood particles (1) , for more effective acoustical purposes, for decorative and similar purposes with bigger pores, with coarser aggregates, which will not be possible to realize by these layers (1). In these layers (3) more wood particles than in layers under these layers can be used; but it is advised that they are as less as possible and do not exceed 25%. Their water vapour diffusion rates and equilibrium moisture contents can be greater than those of the layers (1) under them as long as they do not hinder the equality between these symmetrical surface layers. Nevertheless, it is advised that the equilibrium moisture contents and the rate of water vapour diffusion of these layers (3) should be low and no wood particles are used in them. In this layer or these layers (3), it is again possible to use cement or organic bonding material, and it is also possible not to use any bonding material. In this case, the mortar right under this layer will act as a bonding material. In these layers (3), the materials and processes explained for the layers (1) under these layers can also be used; but separate spreading sections are needed for the spreading of these layers.

All the aggregates, in the layers without wood particles (1), which are used on the upper and lower surfaces of the coated cement bonded wood particleboards or in the layers (3), which are on the outside of the mentioned layers, can be coloured; in these layers white cement can be used; and cements and other materials used in these layers can be coloured with various pigments. The aggregates and/or sand of these surfaces (1 and 3) can be exposed by brushes and/or chemicals and grinded by abrasives. In this case, mosaic, granite, marble and similar appearances are given to the surface (1 and 3) of coated cement bonded wood particleboards. More durable and harder surfaces against scratches and erosion are produced by clearing the cement on the surfaces by physical means such as brushes and/or chemical processes, especially on the surfaces, where quartz, granite and similar hard aggregates are used.

Ground limestone and similar softer materials are used in the production of the boards, which are to be calibrated or in order to provide an easy cutting process. The surface hardness of these boards is in any case harder than that of the layer with wood particles (2), because they contain no wood particles in their surface layers.

In the case, where the layers (1), which will coat the layers with non oriented broad wood strands (2), are to be bonded with inorganic bonding materials, layers with wood particles (2) composed of narrower particles are located in between the layers with wood strands (2) and layers without wood particles (1); and thus, the layers with broad wood strands (2) are bonded with the layers without wood particles (1) much better.

By the subject of invention, coated cement bonded wood particleboard, the linear instability is decreased to 1/3, and in consequence the instability in shape is also decreased.

With the invention, in addition to a more stable material, because it is possible to produce a surface without wood particles (in the form of powder or greater particles), because a high water vapour diffusion resistance for its paint is not required and because it has a lower pH value, the types of paint, which will be applied on the surfaces will be increased; and it will also be possible to use paints, which will be cheaper and which will have longer service lives.

In the existing boards, in order to decrease the dimensional instability, a greater amount is used for a thicker paint; whereas the invention makes it possible to use less paint or even no paint is required. The stability provided by the invention in the cement bonded wood particleboards without paint, gives a much better result than the one provided by paint.

## Claims

1. A coated cement bonded wood particleboard, which is **characterized by** layers (1) comprising a mortar, which is composed of inorganic and/or organic materials with inorganic and/or organic bonding materials, which has resistance to weathering and which does not include wood particles or includes a maximum of 4% wood particles by weight; and which coats both outside surfaces of the core layer(s) (2) which in turn are produced by mixing cement and water with wood particles and/or wood strands and spreading these wood particles and/or strands without any orientation and moulding them under pressure after the spreading of the surface layers (1) are completed.

2. A coated cement bonded wood particleboard of claim 1, which is **characterized by** the layer(s) (3) which further coat(s) the coating layers (1) and which is a modified version of the layers (1) in that they may be with or without any bonding material.

3. A coated cement bonded wood particleboard of claims 1 to 2, which is **characterized by** the layers (1), made of a mortar, containing all sorts of additives, crushed stone, aggregates, sand, fillers and pigments, and the surfaces of which arc unprocessed or decorated by various textures, relief, designs and colours with the help of various chemicals or processes such as grinding or brushing techniques or moulds.

4. A coated cement bonded wood particleboard of claims 2 to 3, which is **characterized by** the surface layer(s) (3), made of a mortar , containing all sorts of additives, crushed stone, aggregates , sand, fillers and pigments, and surfaces of which are unprocessed or decorated by various textures, relief, designs and colours with the help of various chemicals or processes such as grinding or brushing techniques or moulds.

5. A coated cement bonded wood particleboard of claims 1 to 4, which is **characterized** with layer(s) (2), containing more than 4 weight-% wood particle and/or wood strand and a mortar comprising additives, crushed stone, aggregates, sand and fillers.

## Patentansprüche

1. Eine beschichtete Zementspanplatte, die durch Lagen (1) **gekennzeichnet** ist, welche einen Mörtel aufweisen, der aus anorganischen und/oder organischen Materialien mit anorganischen und/oder organischen Bindemitteln besteht, kein Holzpartikel aufweißt oder mit Gewichtsprozent höchstens 4 % Holzpartikel umfaßt und witterungsbeständig ist und der die beiden Außenflächen der Kernlage(n) (2) beschichtet, die wiederum durch Mischung von Zement und Wasser mit Holzpartikeln und /oder langen, schlanken Spänen hergestellt werden, wobei diese Holzpartikel und/oder lange, schlanke Späne ohne irgendeine Orientierung verstreut und nach der Vollendung der Streuung der oberflächlichen Lagen (1), unter Formpressen abgeformt werden.

2. Eine beschichtete Zementspanplatte, nach Anspruch 1, die **gekennzeichnet ist durch** Lage(n) (3), welche ferner die Anstrichschichten (1) beschichtet (beschichten) und welche eine modifizierte Version von den Lagen (1) ist, weil diese mit oder ohne irgendein Bindemittel sein können.

3. Eine beschichtete Zementspanplatte nach einem der Ansprüche 1 bis 2, die **gekennzeichnet ist durch** Lage(n) (1), welche aus Mörtel hergestellt ist (sind) und alle Sorten von Zusatzstoffen, Schotter, Zuschlagsstoffen, Sand, Füllstoffen und Farbmitteln aufweisen und deren Oberflächen unverarbeitet oder **durch** verschiedene Oberflächenstrukturen, Reliefs, Ausgestaltungen und Farben mit Hilfe von verschiedenen Chemikalien oder Prozessen wie Schleifen oder Bürstenmethoden oder aber **durch** Formen dekoriert werden.

4. Eine beschichtete Zementspanplatte nach einem der Ansprüche 2 bis 3, die **gekennzeichnet ist durch** Oberflächenlage(n) (3), welche aus Mörtel hergestellt ist (sind) und alle Sorten von Zusatzstoffen, Schotter, Zuschlagsstoffen, Sand, Füllstoffen und Farbmitteln aufweisen und deren Oberflächen unverarbeitet oder durch verschiedene Oberflächenstrukturen, Reliefs, Ausgestaltungen und Farben mit Hilfe von verschiedenen Chemikalien oder Prozessen wie Schleifen oder Bürstenmethoden oder aber **durch** Formen dekoriert werden.

5. Eine beschichtete Zementspanplatte nach einem der Ansprüche 1 bis 4, die **gekennzeichnet ist durch** Lage(n) (2) umfassend Holzpartikel und/oder lange, schlanke Späne mit Gewichtsanteil mehr als 4 % und **durch** einen Mörtel, der Zusatzstoffe, Schotter, Zuschlagsstoffe, Sand und Füllstoffe umfaßt.

## Revendications

1. Un panneau de particules en bois agglomérées au ciment, revêtu et **caractérisé par** des couches (1) comprenant un mortier composé de matériaux organiques et/ou inorganiques avec des liants organiques et/ou inorganiques ayant une résistance à l'altération atmosphérique et ne comprenant pas de particules de bois ou comprenant au maximum 4% de particules de bois en tant que poids; et qui revêt les deux surfaces extérieures de la (des) couche(s) de base (2) qui sont produites en mélangeant du ciment et de l'eau avec des particules de bois et/ou lamelles minces longues de bois et en dispersant ces particules de bois et/ou lamelles minces longues de bois, sans aucune orientation, et en les moulant sous pression après avoir achevé la dispersion des couches de surface (1)

2. Un panneau de particules en bois agglomérées au ciment, revêtu et, selon la revendication 1, **caractérisé par** la (les) couche(s) (3) qui revêt/revêtent les couches de revêtement (1) et qui est une version modifiée des couches (1) car elles peuvent être avec ou sans liant.

3. Un panneau de particules en bois agglomérées au ciment, revêtu, et selon les revendications 1 et 2, **caractérisé par** les couches (1), composées de mortier, comprenant toutes sortes d'adjuvants, de pierres concassées, d'agrégats, de sable, de matériaux de remplissage et de colorants dont les surfaces non-traitées ou décorées par divers reliefs, textures, couleurs et dessins, à l'aide de divers produits chimiques ou procédés comme les techniques de ponçage ou de brossage ou les moules.

4. Un panneau de particules en bois agglomérées au ciment, revêtu et, selon les revendications de 2 à 3, **caractérisé par** la (les) couche(s) de surface(s) (3), composée(s) de mortier, comprenant toutes sortes d'adjuvants, de pierres concassées, d'agrégats, de sable, de matériaux de remplissage et de colorants, et dont les surfaces sont non-traitées ou décorées par divers reliefs, textures, dessins et couleurs, à l'aide de divers produits chimiques ou procédés comme les techniques de ponçage ou de brossage ou les moules.

5. Un panneau de particules en bois agglomérées au ciment, revêtu et, selon les revendications de 1 à 4, **caractérisé par** une (des) couche(s) (2) comprenant des particules de bois et/ou lamelles minces longues de bois qui pèsent plus de 4 % et un mortier, comprenant des adjuvants, des pierres concassées, des agrégats, du sable et des matériaux de remplissage.
